(19) Europäisches Patentamt
European Patent Office
Office européen des brevets

(11) **EP 2 649 560 B1**

(12) **FASCICULE DE BREVET EUROPEEN**

(45) Date de publication et mention
de la délivrance du brevet:
**06.09.2017 Bulletin 2017/36**

(51) Int Cl.:
***G06K 19/06*** *(2006.01)* ***G06K 7/14*** *(2006.01)*

(21) Numéro de dépôt: **11811076.6**

(86) Numéro de dépôt international:
**PCT/FR2011/052932**

(22) Date de dépôt: **09.12.2011**

(87) Numéro de publication internationale:
**WO 2012/076828 (14.06.2012 Gazette 2012/24)**

(54) **PROCÉDÉ DE DÉTECTION D'UN MARQUEUR APPOSÉ SUR LA SURFACE D'UN OBJET ET SYSTÈME DE MISE EN OEUVRE**

VERFAHREN FÜR DEN NACHWEIS EINES AN DER OBERFLÄCHE EINES OBJEKTES FIXIERTEN MARKERS UND SYSTEM ZUR UMSETZUNG DES VERFAHRENS

METHOD FOR THE DETECTION OF A MARKER AFFIXED TO THE SURFACE OF AN OBJECT AND SYSTEM FOR IMPLEMENTING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2010 FR 1060340**

(43) Date de publication de la demande:
**16.10.2013 Bulletin 2013/42**

(73) Titulaire: **Ubleam**
**31670 Labège (FR)**

(72) Inventeurs:
• **GURDJOS, Pierre**
**F-31520 Ramonville St Agne (FR)**
• **CHARVILLAT, Vincent**
**F-31240 Saint Jean (FR)**
• **BOURY, Samuel**
**F-31100 Toulouse (FR)**
• **MEZZAROBBA, Olivier**
**F-31450 Corronsac (FR)**

(74) Mandataire: **Ipside**
**29, rue de Lisbonne**
**75008 Paris (FR)**

(56) Documents cités:
**EP-A2- 1 143 372 US-A1- 2009 026 269**

EP 2 649 560 B1

**Description**

*Domaine de l'invention*

L'invention concerne un procédé de détection d'un marqueur apposé sur la surface d'un objet pour permettre l'identification de cet objet et son positionnement par rapport au dispositif d'acquisition. L'invention concerne également un système pour mettre en oeuvre ce procédé de détection.

L'invention trouve des applications dans le domaine de la reconnaissance d'objets au moyen d'un marqueur contenant des données spécifiques à chaque objet.

*Etat de la technique*

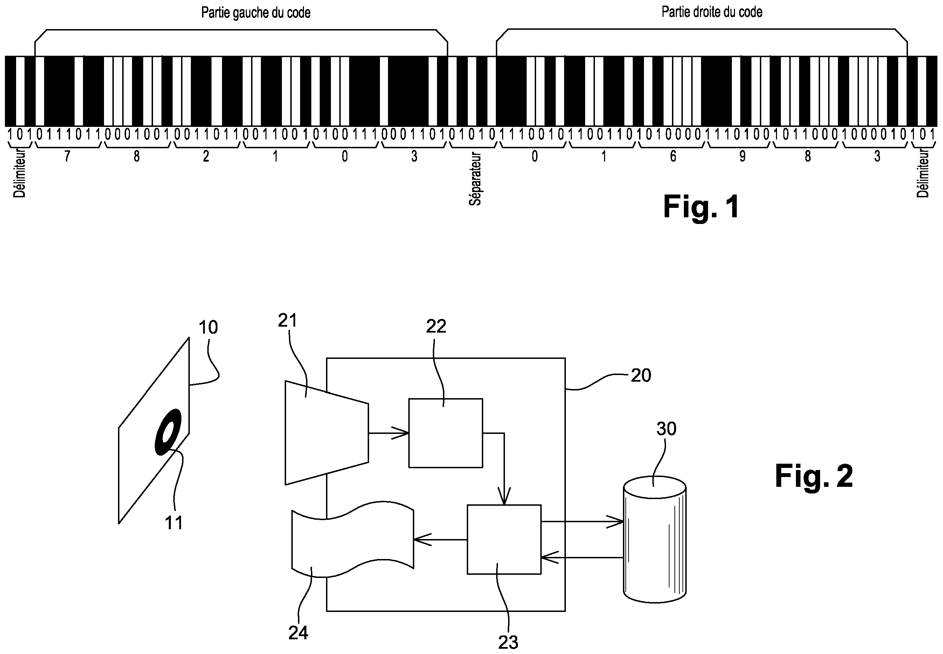

Dans le domaine de la reconnaissance d'objets, il est fréquent d'apposer, sur chaque objet à reconnaître, un marqueur contenant des données spécifiques à l'objet et permettant de reconnaître et d'identifier ledit objet. Actuellement, les marqueurs les plus répandus sont les marqueurs à code-barres. Ces marqueurs à code-barres sont des papiers autocollants, ou étiquettes, destinés à être collés chacun sur un objet à reconnaitre et munis chacun d'un code-barres. Un code-barres, ou code à barres, est un codage de données numériques sous la forme d'un symbole constitué de barres et d'espaces dont l'épaisseur varie en fonction des données à coder. Plus précisément, un code-barres est constitué d'un nombre prédéfini de barres verticales blanches ou noires codant chacune, respectivement, un 0 binaire ou un 1 binaire, un ensemble de 0 et 1 binaires représentant un chiffre, comme montré sur la figure 1. Un code-barres permet ainsi d'associer un nombre à un objet, ce nombre correspondant à des données spécifiques audit objet. Classiquement, ces données spécifiques sont une référence de l'objet, un prix de l'objet, etc.

Ces marqueurs à code-barres, très répandus actuellement, ont non seulement l'inconvénient d'être peu esthétiques, mais surtout d'être difficiles à lire. En effet, les codes-barres sont lus au moyen d'un terminal de lecture optique comportant une optique d'émission d'un faisceau lumineux et un capteur optique. Lors de la lecture d'un marqueur à codes-barres, le terminal de lecture envoie, sur le code-barres, un faisceau lumineux, généralement un faisceau laser de faible puissance, puis analyse la lumière réfléchie. Aussi, pour lire un marqueur à code-barres, l'opérateur chargé de la lecture de ces marqueurs doit présenter ledit marqueur face à l'optique du terminal de lecture, perpendiculaire au faisceau lumineux afin que le faisceau lumineux puisse être réfléchi par le code-barres. L'opérateur doit également présenter le code-barres à une distance relativement proche du capteur afin que le code-barres entre totalement dans un cadre dont la dimension est délimitée par la taille du capteur optique car le terminal de lecture ne comporte aucun moyen d'auto-calibration.

Par ailleurs, comme dans la plupart des types de codage, le codage à code-barres comporte des informations de redondance. En effet, un code-barres comporte, en plus de l'information codée, une information de redondance pour sécuriser la lecture de l'information. Si un code-barres est mal positionné par rapport au capteur optique, ou s'il est déformé car son support est trop souple, alors le code-barres n'est lu que partiellement et il est donc impossible de localiser toute l'information contenue dans ce code-barres. Il y a donc une perte de l'information.

On comprend qu'un marqueur à code-barres ne peut être lu que si le code-barres est correctement placé face au terminal de lecture. La lecture de tels marqueurs à code-barres est donc relativement fastidieuse et longue puisqu'elle nécessite le placement de chaque code-barres devant le terminal de lecture. Ainsi, dans le cas classique de courses dans un supermarché, l'opérateur en caisse doit rechercher, sur chaque objet acheté, le marqueur à code barre puis le placer face au terminal de lecture, un marqueur à code-barres mal positionné ne pouvant être lu.

On comprend qu'avec de tels inconvénients, l'utilisation des marqueurs à code-barres est limitée à des applications dans lesquelles chaque objet muni d'un marqueur à code-barres peut être pris séparément dans un ensemble d'objets afin d'être placé un par un devant le terminal de lecture.

*Exposé de l'invention*

L'invention a justement pour but de remédier aux inconvénients des techniques énoncées précédemment. A cette fin, l'invention propose un marqueur pouvant être lu dans différentes positions, même si la totalité des informations contenues par le marqueur n'est pas directement lisible par le terminal de lecture. L'invention propose également un procédé permettant de lire un tel marqueur et, si besoin, de reconstituer l'information manquante du marqueur. Pour cela, le marqueur de l'invention comporte un contour de positionnement de forme géométrique, ce contour de positionnement permettant la détection du marqueur dans une scène contenant ledit marqueur. La détermination de ce contour, associée à une localisation ou repérage du marqueur dans un référentiel, permet de recomposer l'ensemble du marqueur, et donc l'information contenue dans le marqueur, même en cas d'occultation ou de conditions perturbées. L'invention propose ainsi d'obtenir une information à partir d'un signal image.

De façon plus précise, l'invention concerne un procédé de détection d'un marqueur apposé sur une surface d'un objet, caractérisé en ce qu'il comporte les opérations suivantes :

    a) acquisition d'une image photographique d'une scène contenant au moins un marqueur;
    b) lecture de l'image photographique et détection du marqueur dans ladite scène, cette détection du marqueur comportant :

c) une extraction de contours dans l'image photographique, et

d) une détection, parmi ces contours, d'un contour de positionnement du marqueur correspondant à un ensemble de coniques coplanaires de forme prédéterminée,

e) localisation du contour de positionnement du marqueur comportant :

f) une modélisation d'une image des coniques coplanaires sous une forme matricielle où chaque conique est représentée par une matrice symétrique d'ordre 3,

g) une analyse de ces matrices pour déterminer une correction de perspective de l'image photographique,

h) une détection, dans l'image photographique corrigée en perspective, d'un élément détrompeur associé graphiquement au contour de positionnement du marqueur et correction en rotation de l'image photographique,

i) détection, dans l'image photographique corrigée en perspective et en rotation, de données codées associées graphiquement au contour de positionnement du marqueur et décodage de ces données codées.

Ce procédé peut comporter une ou plusieurs des caractéristiques suivantes :

- les données codées sont situées à l'intérieur du contour de positionnement du marqueur.
- les données codées sont situées autour du contour de positionnement du marqueur.
- le contour de positionnement du marqueur est constitué d'un ensemble de coniques homofocales.
- le contour de positionnement du marqueur est constitué d'un ensemble de cercles coplanaires.
- le contour de positionnement du marqueur est un ensemble de deux cercles concentriques.
- le décodage des données codées comporte l'application d'un algorithme de décodage en luminance ou en chrominance.
- le décodage des données codées comporte l'application d'un algorithme de décodage par signatures géométriques.
- le décodage des données codées comporte une recherche, dans une base de données, d'informations associées aux données décodées.
- les données codées sont formées d'un ensemble de coniques.

L'invention concerne également un système de détection d'un marqueur apposé sur une surface d'un objet, caractérisé en ce qu'il comporte un terminal de lecture comprenant :

- un dispositif de prise d'images apte à réaliser une image photographique d'une scène contenant au moins un marqueur, et
- une unité de traitement de l'image photographique apte à mettre en oeuvre le procédé décrit ci-dessus en détectant un contour de positionnement du marqueur dans l'image photographique, en localisant ce contour de positionnement afin de corriger l'image photographique en perspective et en rotation, et en décodant des données codées associées au marqueur.

Ce système peut comporter une base de données en lien avec le terminal de lecture et contenant des informations associées aux données codées contenues dans le marqueur.

*Brève description des dessins*

Les figures 1 et 6c, déjà décrites, représentent un exemple de marqueur à code-barres selon l'art antérieur.

La figure 2 représente de façon schématique le système de détection d'un marqueur selon l'invention.

La figure 3 représente un diagramme fonctionnel du procédé de détection d'un marqueur selon l'invention.

La figure 4 représente la géométrie de la prise de vue pour un marqueur sous les hypothèses d'un modèle sténopé.

La figure 5 représente un exemple de marqueur selon un mode de réalisation de l'invention.

Les figures 6A, 6B, 6D, 6E et 6H représentent différents exemples de marqueurs selon l'invention.

Les figures 7A, 7B et 7C représentent les éléments codants et le contour de positionnement d'un marqueur selon l'invention.

La figure 8 représente un diagramme fonctionnel de l'encodage des données et du décodage des données selon l'invention.

*Description détaillée de modes de réalisation de l'invention*

L'invention concerne un procédé de détection d'un marqueur apposé sur la surface d'un objet et de lecture des données contenues dans ledit marqueur. Ce procédé consiste tout d'abord à réaliser une image d'une scène de l'environnement dans lequel se trouve au moins un marqueur. Cette scène, appelée aussi zone, peut être relativement vaste ; ce n'est pas nécessairement une zone ciblée autour du marqueur ; au contraire, cette scène peut contenir plusieurs marqueurs. Par exemple, cette scène peut être un caddie de supermarché contenant plusieurs articles équipés chacun d'un marqueur selon l'invention et dont on cherche à évaluer le prix total des articles. Cette scène peut également être un lieu public dans lequel évolue une foule de personnes équipées chacune d'un marqueur selon l'invention et dont on cherche à connaitre les identités, ....

Le procédé de l'invention consiste ensuite à traiter la partie de l'image contenant cette scène pour détecter un contour de positionnement d'un marqueur, ou motif de localisation, puis traiter les données contenues à l'intérieur ou à l'extérieur de ce contour de positionnement. Ces traitements de l'image et des données sont décrits de façon plus détaillée par la suite.

Le procédé de l'invention est mis en oeuvre par un système de lecture tel que celui représenté de façon schématique sur la figure 2. Ce système comporte un terminal de lecture 20 qui assure la détection et la lecture d'un marqueur 11 apposé sur un objet 10, tel qu'un badge. Ce terminal de lecture 20 comporte un dispositif de prise d'images 21 apte à réaliser une prise d'image d'une scène contenant au moins un marqueur. Le dispositif de prise d'images 21, ou capteur photographique, assure l'acquisition d'une d'image de la scène, quelle que soit l'orientation et la position du marqueur dans cette scène. Le terminal de lecture 20 comporte également une unité de traitement d'image 22 qui assure la détection du marqueur dans l'image ainsi que le décodage des données contenues au sein du marqueur. Le terminal de lecture 20 comporte, de plus, une unité de commande 23 assurant la gestion des données décodées. Pour cela, l'unité de commande 23 est reliée, d'une part, à une interface 24, par exemple une interface homme/machine, et, d'autre part, à une base de données 30.

Cette base de données 30 peut être distante du terminal de lecture 20 et reliée, par voie filaire ou non filaire (par exemple par liaison Wifi), à l'unité de commande 23. Cette base de données 30 contient des informations associées aux données spécifiques contenues dans le marqueur.

L'interface homme/machine 24 peut être un écran, par exemple associé à un clavier, ou un écran tactile sur lequel peuvent être affichées les données décodées du marqueur et/ou des informations issues de la base de données 30.

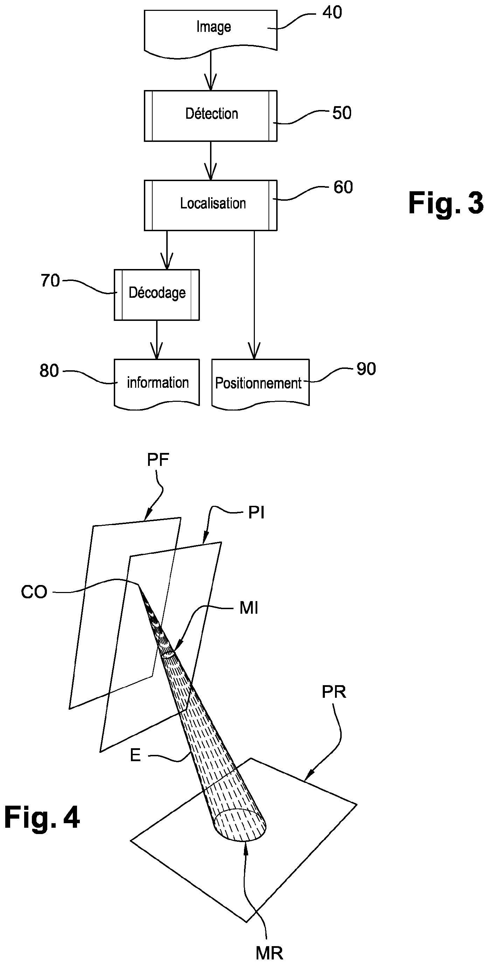

Le procédé mis en oeuvre par ce système est représenté sous la forme d'un diagramme fonctionnel sur la figure 3. Ce diagramme montre une première étape 40 d'acquisition d'une image photographique d'une scène contenant au moins un marqueur. L'image photographique peut être réalisée quel que soit l'angle de vue du capteur photographique, dans la limite des caractéristiques dudit capteur. Cette image photographique étant une image globale d'une scène, le marqueur peut se trouver positionné face au capteur photographique ou bien de perspective ou encore à une extrémité de l'image (en haut, en bas, sur un côté, etc.). L'environnement du marqueur peut donc être bruité. On considère qu'une image est bruitée lorsque la luminosité est faible et que l'image est sous-exposée ou, au contraire, lorsque la luminosité est élevée et que l'image est surexposée. Une image est également bruitée lorsqu'elle est floue, que le marqueur est de biais, ou qu'il est éloigné dans la zone de l'image, etc.

Le procédé de l'invention comporte ensuite une étape 50 de lecture et de traitement de l'image photographique de la scène afin de détecter le marqueur dans l'image.

Le marqueur utilisé dans l'invention comprend :

- un contour de positionnement constitué d'au moins deux coniques coplanaires à partir desquelles une correction de perspective de l'image photographique peut être calculée et d'un élément détrompeur à partir duquel l'orientation de l'image corrigée est déterminée, et

- des données codées associées graphiquement au contour de positionnement, c'est-à-dire situé à l'intérieur ou l'extérieur du contour de positionnement

Selon l'invention, les coniques coplanaires peuvent être des coniques homofocales ou ces cercles coplanaires. En particulier, les coniques homofocales peuvent être des ellipses, des cercles, des hyperboles ou des paraboles, ..., ayant un foyer commun.

Les données codées sont des données qui peuvent être codées géométriquement dans la famille des coniques (cercles, hyperboles, paraboles, ellipses), codées sous forme de codes barres usuels (EAN 13), sous forme de figures graphiques (logo), sous forme de caractères alphanumériques, etc.

Pour détecter un marqueur, le procédé de l'invention consiste à détecter le contour de positionnement du marqueur. Selon l'invention, le contour du marqueur est le contour d'un ensemble de coniques coplanaires observé en perspective. Dans un mode de réalisation préféré de l'invention, le contour de positionnement du marqueur est constitué de deux cercles concentriques dont la zone inter-cercle peut être grisée ou colorée de façon à former une sorte de couronne.

Le procédé de l'invention propose donc d'extraire les contours de l'image photographique, c'est-à-dire les contours de tous les éléments (dont le marqueur) contenus dans ladite image photographique puis de détecter, parmi tous les contours, le contour de positionnement du marqueur ce qui permet de réduire l'image photographique à une région d'intérêt, appelée aussi zone ROI, correspondant à la zone de l'image photographique située autour du marqueur.

L'extraction des contours de la zone ROI peut être réalisée au moyen, par exemple, d'un algorithme dédié de type Sobel ou Canny. Il est possible alors d'améliorer les contrastes et la luminosité en normalisant cette zone ROI.

La détection du contour de positionnement du marqueur est réalisée en recherchant, parmi les contours extraits, un ensemble de coniques coplanaires de forme prédéterminée observée en perspective, cet ensemble de coniques coplanaires étant le contour de positionnement du marqueur.

Cette détection du contour de positionnement du marqueur peut être effectuée en appliquant un détecteur des primitives de ces coniques, par exemple une ellipse, sur un plan au moyen, par exemple, d'une transformée de Hough couplée avec ajustement de la conique aux données (conic fitting, en termes anglo-saxons) par la méthode des moindres carrés. Tout procédé de détection des contours même partiels peut être appliqué. Dans le mode de réalisation préféré où le contour de positionnement a une forme de couronne, les primitives détectées sont des ellipses.

Le procédé consiste ensuite à sélectionner, parmi toutes les primitives, le meilleur candidat selon un critère prédéfini. Dans notre mode de réalisation préféré où le contour de positionnement a une forme de couronne, on sélectionne deux ellipses ayant les caractéristiques proches de deux cercles concentriques observés en perspective (les centres des ellipses sont proches, ...). Cette détermination des projections de primitives permet de connaitre le contour de positionnement du marqueur dans un plan Image.

A l'issue de cette détection, les signatures géométriques, fondées sur l'analyse des matrices représentant les primitives sélectionnées, c'est-à-dire des coniques, sont utilisées pour réaliser l'étape 60 de localisation du contour de positionnement du marqueur sur l'image photographique.

Cette étape 60 de localisation du contour de positionnement du marqueur permet de corriger l'image photographique en perspective et en rotation. Cette étape de localisation 60 fournit une information 90 de localisation ou positionnement du marqueur dans un référentiel, tel que le référentiel du dispositif de prise d'image. Cette étape 60 consiste plus précisément à estimer la transformation homographique des primitives liant le plan Réel au plan Image du marqueur, traités comme des plans projectifs.

On a représenté, sur la figure 4, un exemple des plans Réel et Image lors d'une transformation homographique. Cette figure 4 montre :

- le plan Focal PF qui correspond au plan parallèle au plan Image et contenant le centre optique CO du capteur photographique,
- le plan Image PI qui correspond au plan de la scène contenant l'image du marqueur MI, et
- le plan Réel PR qui correspond au plan de la scène contenant le marqueur réel MR.

Cette figure 4 représente également le cône elliptique E ayant pour sommet le centre CO du capteur photographique et tangent au contour de positionnement du marqueur. On montre ainsi que le contour du marqueur dans le plan Image est une ellipse tandis que le contour du marqueur dans le plan Réel est circulaire.

Dans le but de corriger le plan Image PI en perspective de façon à ce que le contour de positionnement du marqueur dans le plan Image PI ainsi corrigé soit identique à celui du plan Réel PR à une rotation 2D près, on cherche à estimer une homographie H réalisant une bijection entre le plan Image PI et le plan Réel PR.

L'homographie H est représentée par une matrice homogène d'ordre 3. Cette matrice H peut être calculée à partir de la décomposition en valeurs singulières (SVD) d'une matrice d'ordre 3 et de rang 2 d'une conique du plan projectif, notée CTA ci-après et appelée conique tangentielle absolue 2D. CTA est une conique remarquable du plan Réel PR dont on cherche à estimer la projection dans le plan Image..

Lors de la génération d'un marqueur selon l'invention, on choisit un contour de ce marqueur qui puisse être, de préférence, facilement détectable. Pour cela, on peut choisir un contour de positionnement qui soit suffisamment contraint pour ne donner lieu qu'à une solution unique.

Le procédé de l'invention propose donc de modéliser l'image des coniques correspondant au contour de positionnement du marqueur sous une forme matricielle M1, M2, où M1 et M2 sont deux matrices homogènes d'ordre 3 représentant les deux coniques, et d'utiliser les propriétés des coniques pour considérer qu'il existe une combinaison linéaire des matrices M1 et M2 égale, à un facteur scalaire multiplicatif près, à CTA. En d'autres termes, il existe un scalaire s tels que CTA ~ M1+s*M2, où l'opérateur ~ signifie « égal à un facteur scalaire multiplicatif près ».

Le scalaire s peut être déterminé à partir d'une analyse algébrique des matrices M1 et M2, en résolvant un problème de calcul de valeurs propres généralisées du couple (M1, M2), pour lequel une solution non ambiguë est explicitée. Le calcul de H est réalisé à partir de la décomposition en valeurs singulières (SVD) de la matrice CTA ainsi obtenue.

Dans le mode de réalisation préféré où le contour de positionnement a une forme de couronne, le rapport de rayon entre les deux cercles concentriques formant la couronne est connu ou non. Les points de ces cercles se projettent dans le plan Image sur deux coniques, à savoir des ellipses, représentées par leurs matrices respectives M1 et M2 pour lesquelles un point de l'ellipse i satisfait l'équation $x^T \times M_i \times x = 0$ où x est le vecteur de coordonnées homogènes de ce point. Une manière optimisée de calculer la matrice homographique H à partir de calculs de valeurs propres généralisées de M1 et M2 est décrit dans la publication IEEE intitulée « Geometric and Algebraic Constraints of Projected Concentric Circles and their applications to Camera Calibration ».

Il est à noter que le calcul des paramètres de la correction de perspective de l'image photographique permet également de calibrer le dispositif de prise d'images 21, selon un modèle sténopé simplifié

L'analyse des matrices M1 et M2 permet ainsi de déterminer une correction de perspective de l'image photographique. Il est alors possible de corriger la perspective de l'image photographique pour obtenir une image photographique corrigée en perspective permettant une lecture correcte du marqueur.

Toutefois, cette correction de perspective est obtenue à une rotation 2D près. Le procédé de l'invention propose alors de corriger la rotation de cette image corrigée en perspective en détectant, dans l'image corrigée en perspective, un élément détrompeur associé graphiquement au contour de positionnement du marqueur.

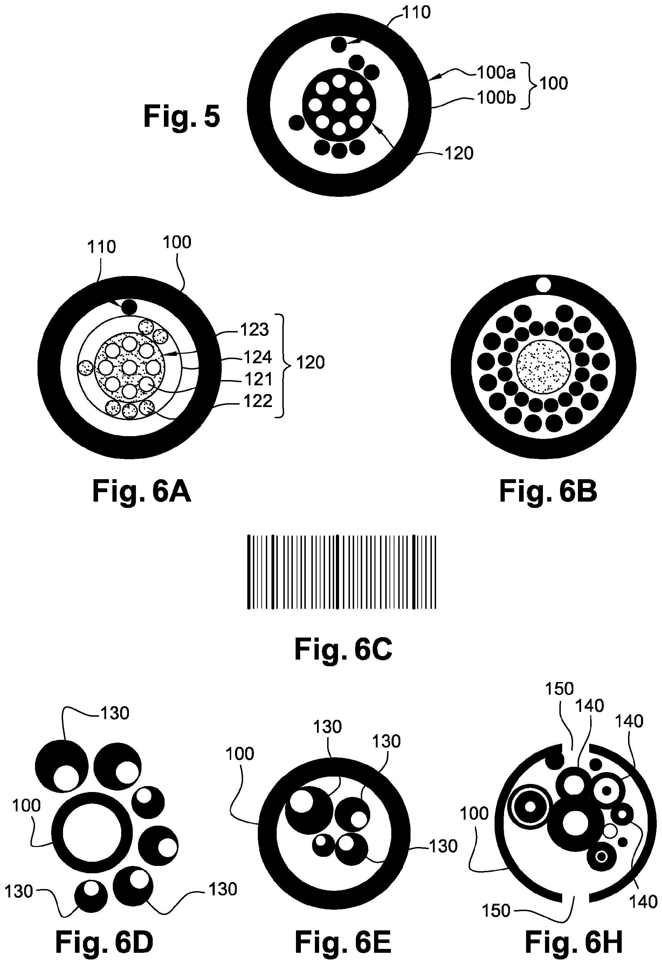

En effet, dans le mode de réalisation préféré, les cercles étant concentriques, une ambiguïté de rotation peut persister à l'issue du calcul homographique. Le procédé de l'invention propose alors d'ajouter un point de référence formant un élément détrompeur. Cet élément détrompeur constitue une des signatures géométriques des primitives du contour de positionnement lors de l'étape de localisation dudit contour de positionnement. Il permet de calculer la rotation à appliquer à l'image photographique corrigée en perspective pour obtenir une image photographique corrigée en perspective et en rotation, sur laquelle le marqueur peut être lu sans ambiguïté. Cet élément détrompeur peut être un point particulier tel qu'un rond, placé à un endroit particulier par rapport au contour de positionnement, c'est-à-dire aux cercles concentriques du marqueur. Un exemple d'un marqueur équipé d'un tel élément détrompeur est représenté sur la figure 5. Dans cet exemple, le marqueur comporte deux cercles concentriques 100a et 100b formant une couronne 100. Le cercle concentrique 100a a un rayon inférieur au cercle concentrique 100b. Le marqueur comporte aussi un élément détrompeur 110, ou détrompeur angulaire. Ce détrompeur angulaire est un élément de forme ronde, placé de façon excentrée par rapport aux données codées 120, à proximité du cercle concentrique de rayon inférieur 100a. Dans cet exemple, l'élément détrompeur 110 est une pastille ronde et noire ; il pourrait aussi avoir la forme d'un cercle ou toute autre forme géométrique facilement dissociable des données codées, ce qui lui permet d'être détecté sans ambiguïté. Dans l'exemple de la figure 5, l'élément détrompeur a une forme identique à celle des données codées 120, mais son emplacement est suffisamment décentré pour être détecté sans ambiguïté. En réalisant une détection de ce détrompeur, par exemple par corrélation, une matrice de rotation est calculée puis multipliée à la matrice homographique pour former une matrice homographique totale.

Il est à noter que le calcul des paramètres de la correction de perspective de l'image photographique peut permettre également de déterminer l'orientation 3D du dispositif de prise d'images 21 par rapport au plan du marqueur.

On comprend de ce qui précède que la reconstruction des données contenues dans le marqueur peut être réalisée dans des conditions perturbées, telles qu'une sur ou sous-exposition de lumière, un point de vue distant ou de biais, un flou de bougé, un flou de mise au point, une occultation partielle, etc. En effet, la détermination du contour de positionnement associé à une localisation du marqueur dans un référentiel, par exemple le référentiel du dispositif de prise d'image, permet de recomposer l'ensemble du marqueur lorsqu'il en manque une partie sur l'image photographique et, ainsi, de récupérer toute l'information sans problème d'occultation ou de conditions perturbées.

En outre, les traitements d'images utilisés dans le procédé de détection de l'invention étant rapides, le calcul homographique restreint et le calcul de décomposition en valeurs singulières ayant une faible complexité algorithmique, la détection des marqueurs est rapide et performante.

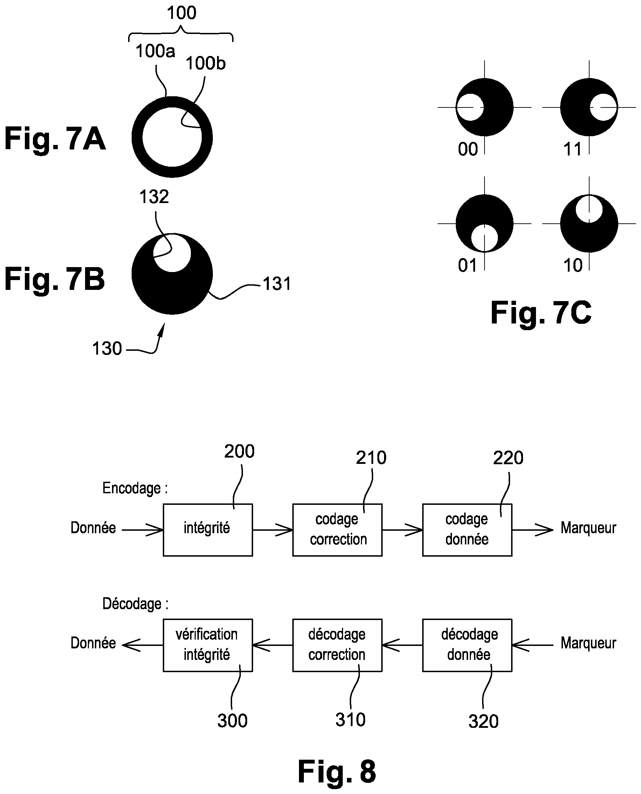

Comme montré sur la figure 3, le procédé de l'invention comporte ensuite une étape 70 de décodage de l'information contenue dans les données codées du marqueur. En effet, le marqueur selon l'invention comporte, outre son contour de positionnement et l'élément détrompeur, les données codées placées à l'intérieur ou à l'extérieur du contour de positionnement, selon une géométrie prédéterminée par le type de codage. Cette étape de décodage consiste à appliquer un algorithme de décodage pour décoder les données numériques codées dans le marqueur. Un schéma fonctionnel montrant les différentes étapes du décodage est représenté sur la figure 8. Ce schéma montre que l'étape 70 comporte une opération 320 de décodage de la donnée lue sur le marqueur, puis une opération 310 de décodage des valeurs de correction de la donnée puis une opération 300 de vérification de l'intégrité de la donnée.

L'étape 70 peut comporter, avant le décodage de l'information, une transformation homographique dite inverse pour retro-projeter l'image sur le plan Réel. Des techniques d'interpolation usuelles peuvent être utilisées en cas de dilatation de l'image. L'image obtenue peut aussi être normalisée pour favoriser la lecture des données codées.

Plusieurs types de codage peuvent être utilisés pour encoder les données du marqueur de l'invention. Quel que soit le type de codage utilisé, une donnée est encodée en respectant les opérations du schéma fonctionnel représenté sur la figure 8 : une opération 200 d'application de l'intégrité à la donnée est tout d'abord réalisée, puis une opération 210 de codage des données de correction, puis une opération 220 de codage de la donnée elle-même. Une fois codée, la donnée peut être appliquée sur le marqueur.

Le codage peut être un codage spécifique au marqueur de l'invention ou, au contraire, un codage non spécifique et utilisé pour d'autres marqueurs. Les données contenues dans le marqueur peuvent aussi être codées par les composantes d'une image.

Comme codage non spécifique, on peut citer, par exemple, le codage en luminance ou en chrominance. Dans un tel codage, chaque donnée est codée sous la forme de points ou d'amas de points dont la valeur binaire est représentée par une couleur ou un niveau de gris. Un exemple de marqueur dans lequel les données sont codées en luminance, est le code Barrel, représenté sur la figure 6A. Dans cet exemple, l'information est portée par une valeur de la luminance au centre des cercles : certaines données sont codées par des points blancs 121 au centre d'un cercle grisé 123 ; d'autres données sont codées par des points grisés 122 à l'intérieur d'un cercle blanc 124. Un autre exemple de marqueur comportant des données codées selon le code Barrel est représenté sur la figure 6B.

Avec un tel codage, l'étape 70 du procédé de l'invention peut comporter une opération supplémentaire de seuillage de l'image, ce seuillage offrant une lecture optimale de la dominante en luminance au centre des cercles. Dans ce cas, une information binaire de 24 bits peut alors être extraite et décodée et/ou corrigée par une fonction de calcul de code correcteur d'erreurs du type Golay, BCH ou Reed Solomon. L'information obtenue en sortie de l'algorithme de décodage est alors une information corrigée.

Comme codage non spécifique, on peut citer également certains codages par signatures géométriques comme le code-barres, montré sur la figure 6C.

D'autres codages par signatures géométriques, spécifiques à l'invention, peuvent être, par exemple, un codage par cercles décentrés, appelé aussi codage Necklace, ou un codage par cercles centrés, appelé codage Flower.

Selon un mode de réalisation préféré de l'invention, les données codées sont formées d'un ensemble de coniques. Par exemple, les données codées peuvent être des cercles, centrés ou décentrés les uns par rapport aux autres, comme montré sur les figures 6.

Comme montré sur la figure 7B, dans le codage par cercles décentrés, chaque donnée numérique est codée au moyen de deux cercles décentrés, ou disques décentrés, formant un élément codant 130. Cet élément codant 130 comporte un disque grisé 131 de rayon R et un disque blanc 132 de rayon R/2. Le disque blanc 132 est placé à l'intérieur de cercle grisé 131, de façon décentrée par rapport audit disque grisé 131. L'emplacement du disque blanc dans le disque grisé détermine la valeur binaire de l'élément codant. Des exemples de valeurs binaires des éléments codants sont représentés sur la figure 7C, décrite de façon plus détaillée par la suite. L'élément codant 130 peut également avoir différentes dimensions, la dimension de cet élément codant déterminant les bits de redondance pour la protection des données.

Selon ce codage par cercles décentrés, le motif de codage, appelé séquence, est composé de au plus 6 éléments codants 130 placés autour, ou à l'intérieur, du contour de positionnement 100 du marqueur. Un exemple d'un tel contour de positionnement est représenté sur la figure 7A. Comme expliqué précédemment, ce contour de positionnement 100 comporte un cercle extérieur 100a et un cercle intérieur 100b, concentriques. Le cercle extérieur 100a peut avoir un diamètre de 60 unités relatives et le cercle intérieur 100b un diamètre de 45 unités relatives.

Comme montré sur la figure 7C, la position du disque blanc dans le disque grisé indique une valeur binaire. Par exemple, si on note S une donnée de 24 bits à encoder selon un codage à cercles décentrés, on représente S sous la forme :

$$S = a_0 a_1 ... a_{11} b_0 b_1 ... b_{11},$$

où les $a_i$ peuvent être des bits de redondance liés à un code correcteur d'erreur systématique et les $b_i$ des bits utiles d'information. Pour chaque i compris entre 0 et 5, la construction du marqueur consiste à ajouter un motif $M_i$ basé sur :

- la valeur de $a_{2i}a_{2i+1}$ selon la règle suivante :

$$00 => R = 40 ;$$

$$01 => R = 35 ;$$

$$11 => R = 30 ;$$

$$10 => R = 25 ;$$

et
- la position du disque blanc dans le disque grisé, en fonction de la valeur de $b_{2i}b_{2i+1}$ selon la règle montrée sur la figure 7C.

Le motif $M_i$ est inséré dans le sens inverse des aiguilles d'une montre, après $M_{i-1}$ autour ou à l'intérieur du contour de positionnement du marqueur.

Un tel codage par cercles décentrés a l'avantage de coder des données sur 24 bits avec 12 bits utiles, ce qui permet un codage de 4096 mots.

Les figures 6D et 6E montrent deux exemples de codage par cercles décentrés selon l'invention. Dans l'exemple de la figure 6D, les éléments codants 130 décrits précédemment sont répartis autour du contour de positionnement 100. Dans l'exemple de la figure 6E, les éléments codants 130 sont répartis à l'intérieur du contour de positionnement 100.

La figure 6H représente un exemple de codage par cercles centrés. Dans cet exemple, les données sont codées par des ensembles de un ou plusieurs cercles de niveaux de gris différents, par exemple des cercles grisés et des cercles blancs, centrés les uns dans les autres et formant des éléments codants 140. Ces éléments codants 140 sont répartis à l'intérieur d'un contour de positionnement 100. Dans une variante, les éléments codants sont placés autour du contour de positionnement. Dans l'exemple de la figure 6H, l'élément détrompeur est réalisé par deux ouvertures 150 dans le contour de positionnement, en regard l'une de l'autre.

On comprend que, dans le procédé de l'invention, les données codées sont décodées en appliquant un algorithme de décodage dépendant du type de codage utilisé. Par exemple, des données codées par signatures géométriques seront décodées en appliquant un algorithme de décodage par signatures géométriques.

Une fois l'étape 70 de décodage terminée, les données numériques contenues dans le marqueur sont décodées et donc lisibles. Ces données numériques peuvent alors être utilisées directement. Elles peuvent également être utilisées pour rechercher des informations associées à ces données. Comme expliqué précédemment ces informations, référencées 80 sur la figure 3, peuvent être recherchées dans une base de données, en utilisant comme lien, la donnée numérique décodée. Par exemple, la donnée numérique décodée peut être associée à des informations d'identité d'une personne, à un prix d'article, à une localisation GPS, etc.

On vient de décrire précédemment un procédé de détection et de décodage d'un marqueur selon l'invention. On peut déduire, de cette description, un procédé pour générer un tel marqueur. En effet, un marqueur selon l'invention est généré en choisissant, dans une famille de coniques coplanaires, une forme de contour de positionnement du marqueur puis en déterminant un élément détrompeur et en insérant cet élément détrompeur dans le marqueur. Un type de codage doit ensuite être choisi pour coder les données numériques de manière déterministe et non ambigüe. Les données numériques ainsi que les bits de redondance sont ensuite codés et placés autour du contour de positionnement, ou à l'intérieur dudit contour, en fonction du codage choisi. Ce placement des éléments codants peut être réalisé selon un arrangement aléatoire ou personnalisé (comme dans le cas du codage par cercle décentrés). Le procédé de génération du marqueur selon l'invention permet d'obtenir des marqueurs ayant une présentation graphique visuellement agréable. En conséquence, le marqueur de l'invention peut être installé à des emplacements visibles tels que des panneaux publicitaires, des logos, des badges, etc. L'esthétisme du marqueur de l'invention offre ainsi un choix d'applications important.

En outre, ce marqueur étant facile à détecter quelles que soient les conditions environnementales, il peut être positionné à distance du terminal lecteur. Par exemple, un marqueur de 5 cm de diamètre peut être détecté et lu à une distance de l'ordre de 4 m ; un marqueur de 30 cm de diamètre peut être détecté et lu à une distance de l'ordre de 10 à 12 m.

Ainsi, un marqueur selon l'invention peut être utilisé, par exemple, pour signer ou tagguer des objets ou des points d'intérêt, par exemple dans un musée, et fournir des services ou des informations associés à ces objets ou points d'intérêt. Il peut aussi être utilisé pour fournir des points de référence de positionnement absolu, par exemple, pour une fonction de navigation géolocalisée. Il peut aussi servir de point de référence de positionnement relatif, par exemple, pour superposer des informations 3D virtuelles sur des éléments réels filmés et affichés sur un écran.

Le procédé décrit dans cette invention apporte des performances particulières telles que :

- une flexibilité : la connaissance d'informations qualitatives sur les coniques (ex : savoir que ce sont des ellipses homofocales) suffit pour pouvoir corriger la perspective de l'image photographique ;
- une robustesse à l'occultation partielle du contour de positionnement: une partie de la conique suffit pour la modéliser sous forme matricielle ;
- une robustesse à la déformation du support (courbure): l'observation faite de la conique déformée sur le support permet de modéliser et de corriger l'effet de déformation. Ainsi, le procédé, basé sur les propriétés géométriques du contour de positionnement du marqueur, permet de corriger, en plus de la perspective inhérente à la prise de vue, une déformation par pliage courbe du support sur lequel est appliqué le marqueur, par exemple lorsque le marqueur est apposé sur un textile.
- une robustesse à l'éloignement : la détection de quelques points du contour permet de détecter de manière fiable le contour de positionnement puis de corriger les problèmes d'observation. Dans le mode de réalisation préféré, si la détection du contour de positionnement n'est réalisée que sur quelques points d'un arc d'ellipse, cela suffit à reconstituer l'ellipse pour détecter le contour de positionnement ;
- une robustesse lors d'une observation très proche : la correction de perspective permet de calibrer la caméra selon un modèle de sténopé simplifié (distance focale, pixel de format rectangulaire).

**Revendications**

1. Procédé de détection d'un marqueur apposé sur une surface d'un objet, **caractérisé en ce qu'**il comporte les opérations suivantes :

   a) acquisition (40) d'une image photographique (10) d'une scène contenant au moins un marqueur (11) ;
   b) lecture de l'image photographique et détection (50) du marqueur dans ladite scène, cette détection du marqueur comportant :

      c) une extraction de contours dans l'image photographique, et

d) une détection, parmi ces contours, d'un contour de positionnement du marqueur correspondant à un ensemble de coniques coplanaires de forme prédéterminée,

e) localisation (60) du contour de positionnement du marqueur comportant :

f) une modélisation d'une image des coniques coplanaires sous une forme matricielle où chaque conique est représentée par une matrice symétrique d'ordre 3,
g) une analyse de ces matrices pour déterminer une correction de perspective de l'image photographique,
h) une détection, dans l'image photographique corrigée en perspective, d'un élément détrompeur associé graphiquement au contour de positionnement du marqueur et correction en rotation de l'image photographique,

i) détection, dans l'image photographique corrigée en perspective et en rotation, de données codées associées graphiquement au contour de positionnement du marqueur et décodage (70) de ces données codées.

2. Procédé de détection selon la revendication 1, **caractérisé en ce que** les données codées sont situées à l'intérieur du contour de positionnement du marqueur.

3. Procédé de détection selon la revendication 1, **caractérisé en ce que** les données codées sont situées autour du contour de positionnement du marqueur.

4. Procédé de détection selon l'une quelconque des revendications 1 à 3, **caractérisé en ce que** le contour de positionnement du marqueur est constitué d'un ensemble de coniques homofocales.

5. Procédé de détection selon l'une quelconque des revendications 1 à 3, **caractérisé en ce que** le contour de positionnement du marqueur est constitué d'un ensemble de cercles coplanaires.

6. Procédé de détection selon l'une quelconque des revendications 1 à 4, **caractérisé en ce que** le contour de positionnement du marqueur est un ensemble (100) de deux cercles concentriques (100a, 100b).

7. Procédé de détection selon l'une quelconque des revendications 1 à 6, **caractérisé en ce que** le décodage des données codées comporte l'application d'un algorithme de décodage en luminance ou en chrominance.

8. Procédé de détection selon l'une quelconque des revendications 1 à 6, **caractérisé en ce que** le décodage des données codées comporte l'application d'un algorithme de décodage par signatures géométriques.

9. Procédé de détection selon l'une quelconque des revendications 1 à 8, **caractérisé en ce que** le décodage des données codées comporte une recherche, dans une base de données (30), d'informations associées aux données décodées.

10. Procédé de détection selon l'une quelconque des revendications 1 à 9, **caractérisé en ce que** les données codées sont formées d'un ensemble de coniques.

11. Système de détection d'un marqueur apposé sur une surface d'un objet, **caractérisé en ce qu'**il comporte un terminal de lecture (20) comprenant :

- un dispositif de prise d'images (21) apte à réaliser une image photographique d'une scène contenant au moins un marqueur, et
- une unité de traitement (22) de l'image photographique apte à mettre en oeuvre le procédé de la revendication 1 en détectant un contour de positionnement du marqueur dans l'image photographique, en localisant ce contour de positionnement afin de corriger l'image photographique en perspective et en rotation, et en décodant des données codées associées au marqueur.

12. Système selon la revendication 11, **caractérisé en ce qu'**il comporte une base de données (30) en lien avec le terminal de lecture et contenant des informations associées aux données codées contenues dans le marqueur.

**Patentansprüche**

1. Verfahren für das Erfassen eines auf einer Oberfläche eines Objektes aufgebrachten Markers, **dadurch gekennzeichnet, dass** es die folgenden Vorgänge aufweist:

a) Erwerben (40) eines photographischen Bildes (10) einer Szene, die mindestens einen Marker (11) enthält;
b) Lesen des photographischen Bildes und Erfassen (50) des Markers in der Szene, wobei dieses Erfassen des Markers Folgendes aufweist:

c) ein Extrahieren von Konturen aus dem photographischen Bild und

d) ein Erfassen unter diesen Konturen von einer Kontur der Positionierung des Markers, die einer Anordnung von koplanaren Kegelschnitten von vorbestimmter Form entspricht,

e) Lokalisieren (60) der Kontur der Positionierung des Markers, umfassend:

f) ein Modellieren eines Bildes der koplanaren Kegelschnitte in einer Matrixform, wobei jeder Kegelschnitt durch eine symmetrische Matrix der Ordnung 3 dargestellt wird,
g) ein Analysieren dieser Matrizen, um eine Korrektur der Perspektive des photographischen Bildes zu bestimmen,
h) ein Erfassen in dem perspektivisch korrigierten photographischen Bild eines Unverwechselbarkeitselementes, das der Kontur der Positionierung des Markers graphisch zugeordnet ist, und Rotationskorrektur des photographischen Bildes,

i) Erfassen in dem perspektivisch korrigierten und rotationskorrigierten photographischen Bild von codierten Daten, die der Kontur der Positionierung des Markers graphisch zugeordnet sind, und Decodieren (70) dieser codierten Daten.

2. Verfahren für das Erfassen nach Anspruch 1, **dadurch gekennzeichnet, dass** sich die codierten Daten im Inneren der Kontur der Positionierung des Markers befinden.

3. Verfahren für das Erfassen nach Anspruch 1, **dadurch gekennzeichnet, dass** sich die codierten Daten um die Kontur der Positionierung des Markers herum befinden.

4. Verfahren für das Erfassen nach einem der Ansprüche 1 bis 3, **dadurch gekennzeichnet, dass** die Kontur der Positionierung des Markers aus einer Anordnung von konfokalen Kegelschnitten gebildet wird.

5. Verfahren für das Erfassen nach einem der Ansprüche 1 bis 3, **dadurch gekennzeichnet, dass** die Kontur der Positionierung des Markers aus einer Anordnung von koplanaren Kreisen gebildet wird.

6. Verfahren für das Erfassen nach einem der Ansprüche 1 bis 4, **dadurch gekennzeichnet, dass** die Kontur der Positionierung des Markers aus einer Anordnung (100) von zwei konzentrischen Kreisen (100a, 100b) gebildet wird.

7. Verfahren für das Erfassen nach einem der Ansprüche 1 bis 6, **dadurch gekennzeichnet, dass** das Decodieren der codierten Daten das Anwenden eines Algorithmus der Luminanz- oder Chrominanzdecodierung aufweist.

8. Verfahren für das Erfassen nach einem der Ansprüche 1 bis 6, **dadurch gekennzeichnet, dass** das Decodieren der codierten Daten das Anwenden eines Algorithmus der Decodierung durch geometrische Signaturen aufweist.

9. Verfahren für das Erfassen nach einem der Ansprüche 1 bis 8, **dadurch gekennzeichnet, dass** das Decodieren der codierten Daten ein Suchen in einer Datenbank (30) von Informationen, die den decodierten Daten zugeordnet sind, aufweist.

10. Verfahren für das Erfassen nach einem der Ansprüche 1 bis 9, **dadurch gekennzeichnet, dass** die codierten Daten aus einer Anordnung von Kegelschnitten gebildet werden.

11. System für das Erfassen eines auf einer Oberfläche eines Objektes aufgebrachten Markers, **dadurch gekennzeichnet, dass** es ein Leseendgerät (20) aufweist, umfassend:

- eine Bildaufnahmevorrichtung (21), die geeignet ist, ein photographisches Bild einer Szene zu erstellen, die mindestens einen Marker enthält, und
- eine Verarbeitungseinheit (22) des photographischen Bildes, die geeignet ist, das Verfahren von Anspruch 1 umzusetzen, indem eine Kontur der Positionierung des Markers in dem photographischen Bild erfasst wird, indem diese Kontur der Positionierung lokalisiert wird, um eine Perspektiv- und eine Rotationskorrektur des photographischen Bildes vorzunehmen, und indem die codierten Daten, die dem Marker zugeordnet sind, decodiert werden.

12. System nach Anspruch 11, **dadurch gekennzeichnet, dass** es eine Datenbank (30) aufweist, die in Verbindung mit dem Leseendgerät ist und Informationen enthält, die den codierten Daten zugeordnet sind, die in dem Marker enthalten sind.

**Claims**

1. Method for detecting a marker affixed to a surface of an object, **characterized in that** it comprises the following operations:

a) acquisition (40) of a photographic image (10) of a scene containing at least one marker (11);

b) reading of the photographic image and detection (50) of the marker in said scene, this detection of the marker comprising:

    c) an extraction of outlines in the photographic image, and
    d) a detection, from these outlines, of an outline of positioning of the marker corresponding to a set of coplanar cones of predetermined form,

e) locating (60) of the outline of positioning of the marker comprising:

    f) a modelling of an image of the coplanar cones in a matrix form in which each cone is represented by a third order symmetrical matrix,
    g) an analysis of these matrices to determine a correction of perspective of the photographic image,
    h) a detection, in the perspective-corrected photographic image, of a foolproof element associated graphically with the outline of positioning of the marker and rotational correction of the photographic image,

i) detection, in the perspective- and rotationally-corrected photographic image, of coded data associated graphically with the outline of positioning of the marker and decoding (70) of these coded data.

2. Detection method according to Claim 1, **characterized in that** the coded data are situated within the outline of positioning of the marker.

3. Detection method according to Claim 1, **characterized in that** the coded data are situated around the outline of positioning of the marker.

4. Detection method according to any one of Claims 1 to 3, **characterized in that** the outline of positioning of the marker is made up of a set of confocal cones.

5. Detection method according to any one of Claims 1 to 3, **characterized in that** the outline of positioning of the marker is made up of a set of coplanar circles.

6. Detection method according to any one of Claims 1 to 4, **characterized in that** the outline of positioning of the marker is a set (100) of two concentric circles (100a, 100b).

7. Detection method according to any one of Claims 1 to 6, **characterized in that** the decoding of the coded data comprises the application of a luminance or chrominance decoding algorithm.

8. Detection method according to any one of Claims 1 to 6, **characterized in that** the decoding of the coded data comprises the application of a geometrical signatures decoding algorithm.

9. Detection method according to any one of Claims 1 to 8, **characterized in that** the decoding of the coded data comprises a search, in a database (30), for information associated with the decoded data.

10. Detection method according to any one of Claims 1 to 9, **characterized in that** the coded data are formed by a set of cones.

11. System for detecting a marker affixed to a surface of an object, **characterized in that** it comprises a reading terminal (20) comprising:

    - an image capturing device (21) capable of producing a photographic image of a scene containing at least one marker, and
    - a processing unit (22) for processing the photographic image capable of implementing the method of Claim 1 by detecting an outline of positioning of the marker in the photographic image, by locating this outline of positioning in order to correct the photographic image in perspective and in rotation, and by decoding coded data associated with the marker.

12. System according to Claim 11, **characterized in that** it comprises a database (30) linked with the reading terminal and containing information associated with the coded data contained in the marker.

EP 2 649 560 B1

Partie gauche du code

Partie droite du code

10 1 0 1 1 1 0 1 1 0 0 0 1 0 0 1 0 0 1 1 0 1 1 0 0 1 1 0 0 1 0 1 0 0 1 1 1 0 0 0 1 1 0 1 0 1 0 1 0 1 1 1 0 0 1 0 1 1 0 0 1 1 0 1 0 1 0 0 0 0 1 1 1 0 1 0 0 1 0 1 1 0 0 0 1 0 0 0 0 1 0 1 0 1

Délimiteur  7  8  2  1  0  3  Séparateur  0  1  6  9  8  3  Délimiteur

**Fig. 1**

10

11

21

22

20

30

24

23

**Fig. 2**

Image — 40

↓

Détection — 50

↓

Localisation — 60

**Fig. 3**

70 — Décodage

↓

80 — information     Positionnement — 90

PF

PI

CO

MI

E

PR

**Fig. 4**

MR

**Fig. 5**

**Fig. 6A**

**Fig. 6B**

**Fig. 6C**

**Fig. 6D**

**Fig. 6E**

**Fig. 6H**

**Fig. 7A**

100
100a 100b
132
**Fig. 7B**
131
130

00    11

01    10

**Fig. 7C**

Encodage :

Donnée → [ intégrité ] → [ codage correction ] → [ codage donnée ] → Marqueur

200    210    220

Décodage :

Donnée ← [ vérification intégrité ] ← [ décodage correction ] ← [ décodage donnée ] ← Marqueur

300    310    320

**Fig. 8**